# EUROPEAN PATENT APPLICATION

(11) **EP 4 835 719 A1**
(43) Date of publication of application: **04.11.2026**
(21) Application number: 26175249.7
(22) Date of filing: 28.04.2026
(51) Int. Cl.: G06F 21/78, H04L 9/08

(54) **CRYPTOGRAPHIC KEY MANAGEMENT BY SELF-ENCRYPTING STORAGE DEVICES**

(30) Priority: 28.04.2025 US 202519191692
(71) Applicant: Google LLC, Mountain View, CA 94043 (US)
(72) Inventor: ANDERSEN, Jeffrey Thomas, Kirkland, 98034 (US); KUNZMAN, Charles David, Oakland, 94610 (US)
(74) Representative: Derry, Paul Stefan

(57) **Abstract**

A self-encrypting storage device can include an ordered set of write-once registers, each configured to store a corresponding secret value, and a key derivation circuit that can derive a Storage Root Key (SRK) from a secret value. The device can include processing logic that, responsive to detecting a triggering event, can transition a write-once register to a next state of an ordered set of states comprising an initial state, an operational state, and a terminal state. The processing logic can identify, among the ordered set of write-once registers, a register that is in an operational state and can derive the SRK from the identified register. In some implementations, the device can derive Media Encryption Keys (MEKs) from the SRK and use these to encrypt host data written to storage. In some implementations, a counter tracks registers' states and updates after transitions, maintaining records throughout the device's lifecycle.

## Description

### TECHNICAL FIELD

Aspects and implementations of the present disclosure relate to self-encrypting storage devices and more specifically relate to cryptographic key management by self-encrypting storage devices.

### BACKGROUND

Self-encrypting storage devices provide data protection by encrypting data written to the storage media and decrypting data when it is read. Unlike software-based encryption solutions, hardware-based self-encrypting devices (SEDs) integrate cryptographic functions at the device level, providing stronger security guarantees while eliminating performance bottlenecks associated with external encryption processing.

### SUMMARY

The below summary is a simplified summary of the disclosure to provide a basic understanding of some aspects of the disclosure. This summary is not an extensive overview of the disclosure. It is intended neither to identify key or critical elements of the disclosure, nor delineate any scope of the implementations of the disclosure or any scope of the claims. Its sole purpose is to present some concepts of the disclosure in a simplified form as a prelude to the more detailed description that is presented later.

An aspect of the disclosure provides a self-encrypting storage device comprising an ordered set of write-once registers, each write-once register configured to store a corresponding secret value, a key derivation circuit configured to derive a Storage Root Key (SRK) from a secret value, and a processing logic. The processing logic is configured to, responsive to detecting a triggering event, transition a write-once register of the ordered set of write-once registers to a next state of an ordered set of states. The ordered set of states comprises an initial state, an operational state, and a terminal state. The processing logic identifies, among the ordered set of write-once registers, a write-once register that is in an operational state. The processing logic derives the SRK from the identified write-once register.

In some implementations, the processing logic is further configured to derive a Media Encryption Key (MEK) from the SRK and utilize the MEK to encrypt a host data item that is being written to the self-encrypting storage device.

In some implementations, the self-encrypting storage device further comprises a memory register storing a counter configured to track states of the ordered set of write-once registers. The processing logic is further configured to update the counter to reference a state of the ordered set of write-once registers after a state transition of a write-once register of the ordered set of write-once registers.

In some implementations, a first value of the counter indicates that a corresponding write-once register being transitioned from the initial state to the operational state, a second value of the counter indicates that the corresponding write-once register is in the operational state, a third value of the counter indicates that the corresponding write-once register is transitioning from the operational state to the terminal state, and a fourth value of the counter indicates that the corresponding write-once register is in the terminal state.

In some implementations, the processing logic is further configured to, responsive to having been reset, identify a write-once register that is transitioning from the initial state to the operational state, and program the identified write-once register with a random value thus causing the identified write-once register to transition to the operational state.

In some implementations, the processing logic is further configured to, responsive to having been reset, identify a write-once register that is transitioning from the operational state to the terminal state, and program the identified write-once register with all-ones (or with all-zeroes, depending on the technology used to implement the write-once register and depending on whether the initial state of the write-once register is all-zeroes) thus causing the identified write-once register to transition to the terminal state.

In some implementations, all bits of a first write-once register in the initial state are equal to zero, a second write-once register in the operational state stores a random value, and all bits of a third write-once register in the terminal state are equal to one.

In some implementations, the processing logic is configured to transition a write-once register to the operational state responsive to transitioning a previous, in the ordered set, write-once register to the terminal state.

In some implementations, the processing logic is further configured to transition a first write-once register from the initial state to the operational state during the initialization of the device.

In some implementations, the processing logic is further configured to, responsive to detecting that all write-once registers have transitioned to the terminal state, derive the SRK from a non-volatile memory register.

In some implementations, the processing logic is further configured to disable accepting host data encrypted to MEKs in response to detecting that no write-once register is in the operational state and before deriving the SRK from a non-volatile secret.

In some implementations, each write-once register comprises a plurality of one-time programmable memory cells configured to store the corresponding secret value.

In another aspect of the disclosure, a method for cryptographic key management in a self-encrypting storage device comprises storing secret values in an ordered set of write-once registers, responsive to detecting a triggering event, transitioning a write-once register of the ordered set of write-once registers to a next state of an ordered set of states, wherein the ordered set of states comprises an initial state, an operational state, and a terminal state, identifying, among the ordered set of write-once registers, a write-once register that is in an operational state, and deriving a Storage Root Key (SRK) from the identified write-once register in the operational state.

In some implementations, the method further comprises deriving a Media Encryption Key (MEK) from the SRK and utilizing the MEK to encrypt a host data item that is being written to the self-encrypting storage device.

In some implementations, the method further comprises tracking states of the ordered set of write-once registers using a counter and updating the counter to reference a state of the ordered set of write-once registers after a state transition of a write-once register of the ordered set of write-once registers.

In some implementations, transitioning the write-once register to the next state comprises transitioning a write-once register to the operational state only after transitioning a previous write-once register in the ordered set to the terminal state.

In some implementations, the method further comprises upon device reset, identifying a write-once register that is in the process of transitioning from the initial state to the operational state, and completing the transition by programming the identified write-once register with a random value to place it fully in the operational state.

In some implementations, the method further comprises upon device reset, identifying a write-once register that is in the process of transitioning from the operational state to the terminal state, and completing the transition by programming the identified write-once register with all-ones to place it fully in the terminal state.

In some implementations, the method further comprises responsive to detecting that all write-once registers have transitioned to the terminal state, deriving the SRK from a non-volatile memory register, and indicating that the self-encrypting storage device is operating in an end-of-lifetime state.

In another aspect of the disclosure, a non-transitory computer-readable medium comprises instructions that, when executed by a processing device, cause the processing device to perform operations comprising storing secret values in an ordered set of write-once registers, responsive to detecting a triggering event, transitioning a write-once register of the ordered set of write-once registers to a next state of an ordered set of states, wherein the ordered set of states comprises an initial state, an operational state, and a terminal state, identifying, among the ordered set of write-once registers, a write-once register that is in an operational state, deriving a Storage Root Key (SRK) from the identified write-once register in the operational state, deriving one or more Media Encryption Keys (MEKs) from the SRK, and encrypting host data using the one or more MEKs when storing the host data on the self-encrypting storage device.

### BRIEF DESCRIPTION OF THE DRAWINGS

Aspects and implementations of the present disclosure will be understood more fully from the detailed description given below and from the accompanying drawings of various aspects and implementations of the disclosure, which, however, should not be taken to limit the disclosure to the specific aspects or implementations, but are for explanation and understanding only.
**FIG. 1** illustrates an example architecture of a self-encrypting drive, in accordance with some implementations of the present disclosure.
**FIG. 2** illustrates a state machine depicting the state transitions of the write-once registers in the self-encrypting drive, in accordance with some implementations of the present disclosure.
**FIG. 3** illustrates a state transition diagram for a single write-once register within the self-encrypting drive, in accordance with some implementations of the present disclosure.
**FIGS. 4A-4E** is a flowchart illustrating an example method for implementing cryptographic key management in a self-encrypting storage device, in accordance with some implementations of the present disclosure.
**FIG. 5** is a block diagram illustrating an example computer system, in accordance with some implementations of the present disclosure.

### DETAILED DESCRIPTION

Storage devices like Solid State Drives (SSDs) and Hard Disk Drives (HDDs) may employ various security mechanisms to protect sensitive data across their operational lifespan. From initial deployment through active use and eventual retirement, the storage devices can maintain data confidentiality while providing verifiable methods for secure data deletion when required. Self-encrypting Devices (SEDs) represent a class of storage devices that employ hardware and/or firmware-based mechanisms to encrypt the data stored on a device. By integrating cryptographic functions at the device level, SEDs can provide transparent encryption that operates independently of the host system, offering stronger security guarantees than software-based solutions and eliminating performance bottlenecks associated with external encryption processing.

While SEDs offer significant security advantages, secure data erasures in these systems may present certain challenges. For example, physically overwriting all data stored on the device degrades SSD lifespan and does not guarantee the confidentiality of the data since certain techniques may analyze the residual charge in the medium and thus reconstruct the previously written data. These concerns become particularly significant in environments where devices might be decommissioned but not physically destroyed.

Described herein are systems and methods for cryptographic key management by self-encrypting storage devices. The systems and methods implement a one-way state machine that tracks the states of write-once registers that are utilized for storing cryptographic secrets. A write-once register is a set of one-time programmable memory cells where each bit begins in one binary logical state (e.g., a logical zero) and can be permanently modified to represent another binary logical state (e.g., a logical one). Accordingly, each bit can be colloquially referred to as "fuse" to emphasize the only possible state transition during its lifetime. An example write-once register may contain multiple bits (e.g., 256 bits) to store a cryptographic secret. In some implementations, a write-once register can be in one of the following three states: the initial state (all bits are zeroes), the programmed state (some of the bits have been transitioned to "1"), and the erased state (all bits have been transitioned to "1").

In some implementations, the storage device can employ multiple write-once registers, such that each write-once register stores a corresponding cryptographic secret value. Each write-once register can irreversibly transition through an ordered sequence of states. In the initial state, all bits of the write-once register contain zeros, representing the unprogrammed (e.g., post-manufacturing default) state. In the operational state, some of the bits have been transitioned to "1" state, thus allowing the write-once register to store a randomized bit pattern (e.g., generated by importing entropy from one or more hardware components, such as a random number generator), from which a Storage Root Key (SRK) can be derived. In the terminal state, all bits have been transitioned to "1" state indicating that this write-once register has been permanently invalidated and can no longer be used for deriving the SRK. These transitions are one way, sequential and permanent.

The controller of the SED may implement a state machine, such that only one write-once register may be active (e.g., in the operational state) at any given time, and the secret value stored by this active write-once register can be used to generate a Storage Root Key (SRK). The SRK may be used to derive various Media Encryption Keys (MEKs), which can be used to encrypt specific regions of the storage media, such as individual partitions, sectors, or blocks.

When secure erasure of the SED is needed (e.g., when the device is de-commissioned or transferred to another user), the currently active write-once register is permanently transitioned to the terminal state, in which all bits would store the value of "1," thus effectively destroying the secret used to generate the current SRK. Without a valid SRK, all the MEKs derived from the SRK become permanently unrecoverable since they exist only in volatile memory and cannot be regenerated after a reset, and consequently, all data encrypted with those MEKs becomes permanently inaccessible.

To return the device to the operational state, the next write-once register (e.g., the next write-once register in a sequence of write-once registers) is then modified to store a randomized value, thus establishing a new SRK from which new MEKs can be derived.

The state machine implemented by the controller may be analogized to a mechanical ratchet mechanism, allowing movement in only one direction (e.g., forward) through the sequence of states without the possibility of reversal. Just as a mechanical ratchet prevents backward motion, the write-once memory implementation physically prevents reverting to previous states. In some implementations, the controller may track the states of the write-once register by a counter, which is incremented by a predefined value (e.g., 1) every time one of the write-once registers is transitioned to the next state.

In an illustrative example, the lifecycle of an SED may begin at the factory with the first write-once register in the initial state and the counter initialized to a predefined value (e.g., 0). Upon the next reset, the controller can program a randomized pattern into the first write-once register and increment the counter to reflect the operational state of the SED, in which the SRK can be derived from the first write-once register. When cryptographic erasure is required, the controller can program a predefined value (e.g., 1s) into the first write-once register. In some implementations, while programming the predefined value, the controller can increment the counter to reflect the transitional (partially programmed) state of the SED, which may be used for completing transitions in case of resets or power losses. After programming all-ones into the first write-once register, the controller can increment the counter to reflect the erased state. For subsequent erasures, the controller can program the second write-once register, then the third write-once register, and so on, until the last write-once register. The controller can also update the counter after programming the write-once registers. In some implementations, after the final write-once register transitions to the terminal state (e.g., all ones), the device enters the end-of-lifetime state, deriving its SRK from a non-volatile secret. The device remains functional while maintaining the cryptographic erasure of all previous data. This end-of-lifetime state may be indicated by an end-of-lifetime bit that, when set, allows MEKs to be generated even if no SRK is present in any of the write-once registers. This bit can only be set after all storage root keys have been erased and indicates that data may have been written to the device after the final cryptographic erasure.

Unlike other methods for device encryption, the architecture described herein can prevent key recovery attacks. By permanently transitioning the entire write-once register to the terminal state (e.g., all ones), the original randomized value, from which the SRK is derived, is destroyed at the physical level and cannot be recovered. The system can provide secure, verifiable, and irreversible data erasure while maintaining device functionality and minimizing physical wear. The sequential write-once register progression creates a deterministic security lifecycle suitable for high security environments.

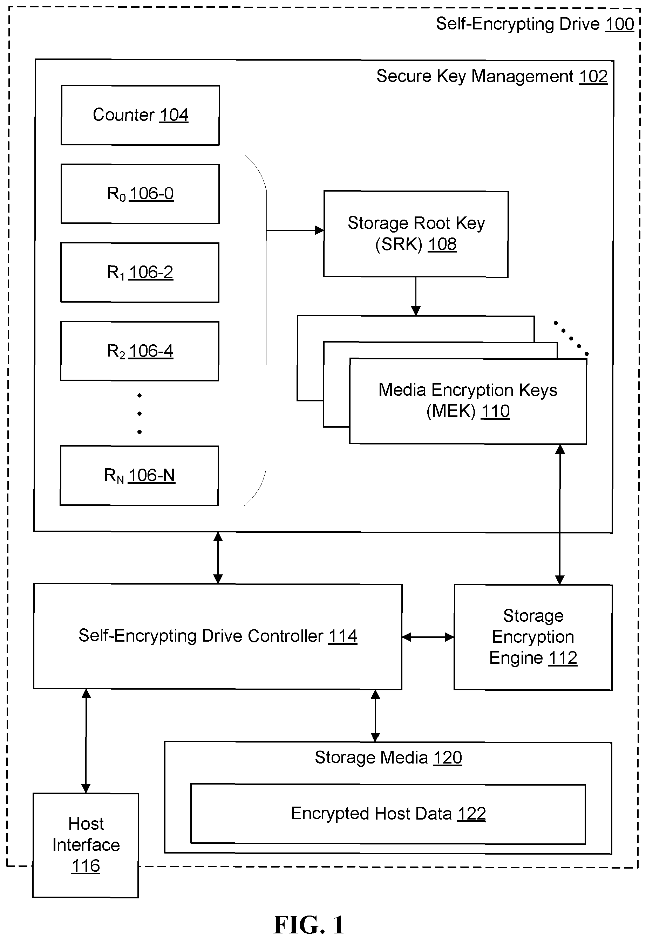

**FIG. 1** illustrates an example architecture of a self-encrypting drive 100, in accordance with implementations of the present disclosure. The self-encrypting drive 100 can include a secure key management system 102, an SED controller 114, a storage encryption engine 112, a host interface 116, and storage media 120.

In some implementations, the secure key management system 102 enables secure storage and management of cryptographic keys used to protect data stored on the storage media 120. The secure key management system 102 may include a counter 104, multiple write-once registers (R₀ 106-0, R₁ 106-2, R₂ 106-4 through Rₙ 106-N), and storage root key (SRK) 108 from which media encryption keys (MEK) 110 are derived. Each write-once register represents a secure value stored in write-once memory that can transition through predefined states in a one-way progression to enable cryptographic erasure operations.

The SED controller 114 may include the processing logic to control the state transitions of the write-once registers and perform key derivation functions. The SED controller 114 may coordinate system-wide operations. The processing logic can be implemented using hardware (e.g., processing device, circuitry, dedicated logic, programmable logic, microcode, hardware of a device, integrated circuit), software (e.g., instructions run or executed on a processing device), or a combination thereof. The processing logic may be implemented as the sole entity with read/write access to the write-once registers. During transitions between write-once registers, the processing logic may enforce a security policy where no MEKs are allowed to be generated while no storage root key is present. This period may define a clean state where the drive has been crypto-erased, and no new data has since been written. The drive may be considered clean until a new storage root key is established, and new data may be written using the derived MEKs.

For SRK derivation, the processing logic can use a standard cryptographic key derivation function (KDF), such as HMAC-based Extract-and-Expand Key Derivation Function (HKDF), which applies a pseudorandom function using the secret value from the active write-once register combined with device-unique identifiers (e.g., serial number or manufacturer ID) as inputs to generate a cryptographically strong SRK. Media Encryption Keys (MEKs) can be derived from the SRK using key derivation functions where the SRK serves as the key material input, while additional parameters, such as the logical block address (LBA) range or namespace identifiers, serve as context information, which can help ensure that different data regions use cryptographically separate keys.

In some implementations, the SED controller 114 serves as the central command and control element of the self-encrypting drive 100. The SED controller 114 may manage communication between all components, process commands from the host interface 116, and control data flow to and from the storage media 120. The SED controller 114 may communicate with the secure key management system 102 to initiate cryptographic operations based on system events or host commands. The triggering events that cause write-once register transitions may originate from specific actions in the cryptographic erasure process. These actions may include the SED controller 114 erasing encrypted MEKs and all ingredients, the secure key management system 102 erasing the old storage root key, the secure key management system 102 persisting a new storage root key, the secure key management system 102 generating new encryption keys, deriving and loading new MEK, and host writing data encrypted to the new MEK.

In some implementations, the storage encryption engine 112 performs cryptographic operations on host data being written to or read from the storage media 120. The storage encryption engine 112 may receive the media encryption keys 110 from the secure key management system 102 and apply the media encryption keys to encrypt or decrypt data. The storage encryption engine 112 may be separated from the secure key management system 102 to maintain security boundaries between key management and encryption operations.

The counter 104 and write-once registers (R₀-Rₙ) may be implemented using write-once registers (e.g., one-time programmable memory elements) that can only transition forward through their defined states, never reverting to previous states. This one-way progression can help ensure that once a cryptographic erasure operation has been performed, the previous encryption keys cannot be recovered, thereby permanently protecting any data previously encrypted with those keys.

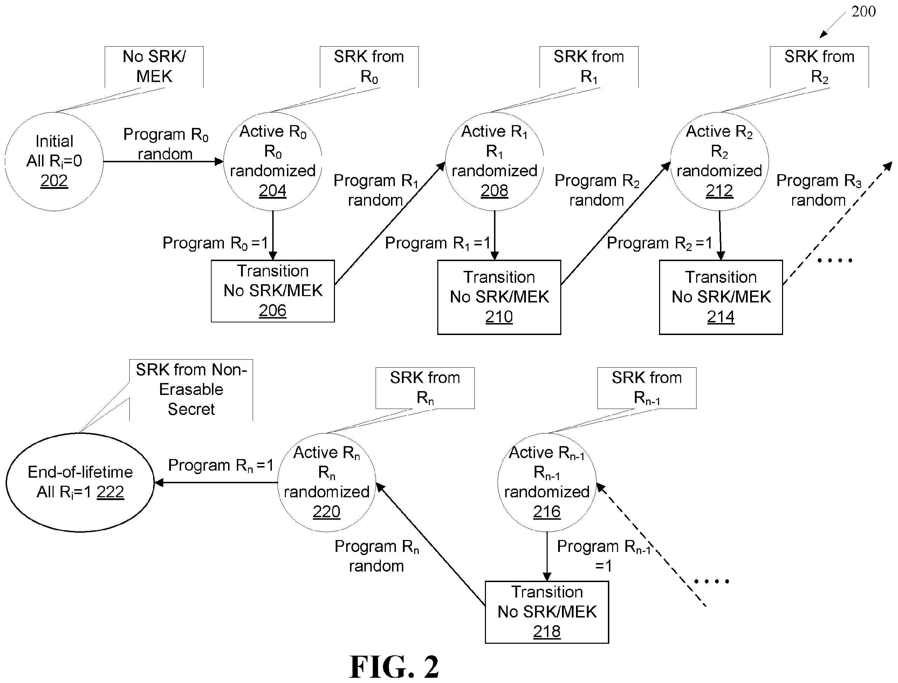

**FIG. 2** illustrates a state machine 200 depicting the state transitions of the write-once registers in the self-encrypting drive, in accordance with implementations of the present disclosure. The state machine 200 represents the one-way progression of states that each write-once register undergoes throughout the operational lifecycle of the device, from initial deployment through cryptographic erasure operations to eventual end-of-lifetime state.

The state machine 200 illustrates how the self-encrypting drive may transition through a sequence of operational states. Each state is characterized by which write-once register is active and being used to derive the Storage Root Key (SRK). The diagram shows the lifecycle, beginning with an initial state 202 where all write-once registers are set to zero, progressing through multiple active states (204, 208, 212, 216, 220) where different write-once registers are used to derive the SRK, transitioning through intermediate states (206, 210, 214, 218) where no SRK is available, and eventually reaching an end-of-lifetime state 222 where all write-once registers have been set to one.

In the initial state 202, all write-once registers (R₀ through Rₙ as shown in FIG. 1) are set to zeros, representing the factory default condition. At this point, as indicated by the label above the state, no SRK or MEK is available, and the device cannot yet encrypt or decrypt data. The initial state can transition to the first active state through the "Program R₀ random" operation, which can program the first write-once register R₀ with random values.

After the first write-once register R₀ has been randomized, the state machine may enter active state 204, where R₀ is in the operational state. In this state, as shown in the label above the state, the SRK may be derived from R₀, which may then enable the generation of MEKs for data encryption and decryption. This corresponds to the key derivation process shown in FIG. 1, where the secure key management system 102 can use an active write-once register to derive the SRK 108, which in turn may be used to derive the MEKs 110.

When cryptographic erasure is required, the state machine can transition from active state 204 to transition state 206 through the "Program R₀=1" operation, which programs all bits of R₀ to ones, rendering it permanently unusable. During this transition state 206, no SRK or MEK is available, as indicated by the label above the state, meaning that all encryption and decryption operations are disabled. This transition state protects against partial erasure scenarios by ensuring the system remains inoperable until a new write-once register is fully operational.

The state machine can then progress to active state 208 through the "Program R₁ random" operation, which may program the next write-once register R₁ with random values. In this state, the SRK may be derived from R₁, enabling normal encryption and decryption operations to resume with new keys. Similar transitions can occur from active state 208 to transition state 210 to active state 212, and so on, as each write-once register is sequentially used and then invalidated.

The pattern can continue through multiple write-once registers, including Rₙ₋₁ and Rₙ, corresponding to active states 216 and 220, respectively. After the final write-once register Rₙ is transitioned to the terminal state through the "Program Rₙ=1" operation, the state machine may enter the end-of-lifetime state 222, where all write-once registers are set to ones. In this terminal state, the SRK can be derived from a non-volatile secret, as indicated by the label above the state, allowing the device to remain functional but without the capability for further cryptographic erasures.

The state machine can enforce several important security properties. First, transitions between states are strictly one-way. Once a write-once register has moved from the initial state to the operational state, or from the operational state to the terminal state, the write-once register cannot revert to its previous state. Second, only one write-once register can be in the operational state at any given time, ensuring clear cryptographic boundaries between different operational periods. Third, a write-once register can only be transitioned to the operational state after the previous write-once register has been transitioned to the terminal state, maintaining the sequential integrity of the mechanism.

The counter 104 shown in **FIG. 1** may track the current state of this state machine, allowing the secure key management system 102 and/or the SED controller 114 to determine which write-once register is currently active and which state each write-once register is in, even across power cycles. This enables the system to recover its state and continue normal operation after unexpected power loss events or system resets.

This state machine implementation can help ensure that once data has been erased cryptographically by transitioning a write-once register to the terminal state, the keys used to encrypt that data can never be recovered, providing strong security guarantees for the permanent removal of sensitive information.

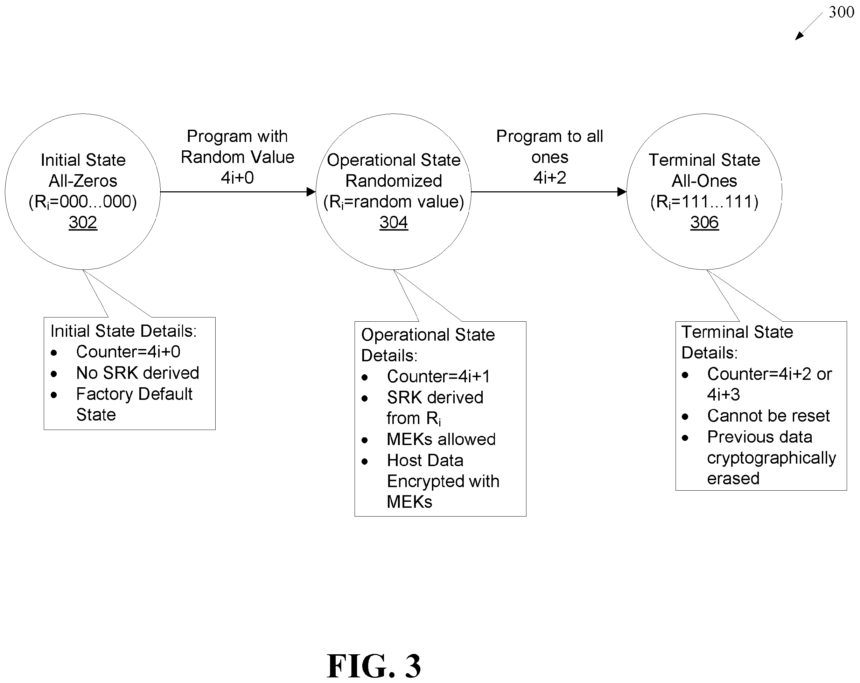

**FIG. 3** illustrates a state transition diagram 300 for a single write-once register within the self-encrypting drive, in accordance with implementations of the present disclosure. The state transition diagram 300 provides a view of the states that each individual write-once register (such as R₀ 106-0, R₁ 106-2, R₂ 106-4, or Rₙ 106-N shown in **FIG. 1****)** can occupy, along with the transitions between these states and the associated counter values maintained by the counter 104.

The state transition diagram 300 shows three distinct states: an initial state 302 where all bits can be zeros, an operational state 304 where the write-once register can contain a randomized value, and the terminal state 306 where all bits are ones. These states correspond to the states referenced in **FIG. 2****,** but **FIG. 3** focuses on a single write-once register rather than the overall system state.

In the initial state 302, a write-once register can contain all zeros (e.g., Rᵢ = 000...000), representing its unprogrammed factory default condition. When a write-once register is in this state, the counter value may be 4i+0, indicating the write-once register's position i and state 0. In this state, no SRK can be derived from this write-once register, and this may represent the factory default condition for write-once registers that have not yet been activated.

The transition from the initial to the operational state 304 can occurs through the "Program with Random Value" operation, with the counter being updated to 4i+0 during the programming process. This corresponds to the "Program Rᵢ random" transitions shown in **FIG. 2****,** such as the transition from the initial state 202 to active state 204 for R₀, or the transition from transition state 206 to active state 208 for R₁. If a reset or a power loss occurs during this transition, upon detecting the reset or the power loss or after the next power-up, the system can detect the incomplete transition via the counter value and complete the interrupted programming operation.

In the operational state 304, the write-once register contains a randomized value (Rᵢ = random value) that can be used for cryptographic purposes. The counter value for this state may be 4i+1, indicating that the write-once register is fully operational. This state can enable the derivation of the SRK from the randomized write-once register, allow MEKs to be generated, and enable host data to be encrypted with these MEKs. This state may correspond to the active states in **FIG. 2** (states 204, 208, 212, 216, and 220) where a specific write-once register is being used to derive the SRK.

The transition from the operational state 304 to the terminal state 306 can occur through the "Program to all ones" operation, with the counter being updated to 4i+2 during this process. This step can correspond to the "Program Rᵢ = 1" transitions shown in **FIG. 2****,** such as the transition from active state 204 to transition state 206 for R₀. If a reset or a power loss occurs during this transition, upon detecting the reset or the power loss or after the next power-up, the system can detect the incomplete transition via the counter value and complete the programming to all-ones, ensuring the cryptographic erasure completes even after unexpected interruptions.

In the terminal state 306, the write-once register can contain all ones (e.g., Rᵢ =111...111), indicating the write-once register has been permanently invalidated. The counter value for this state may be 4i+2 or 4i+3, depending on whether the programming to all ones is in progress or complete. After a write-once register enters this state, the write-once register cannot be reset to a previous state, and the data previously encrypted using keys derived from this write-once register can be cryptographically erased. This terminal state can correspond to the condition of write-once registers that have been used and invalidated in **FIG. 2****.**

The state transition diagram illustrates the one-way nature of the transitions. A write-once register can only move forward through the states (e.g., from initial to operational to terminal) and can never revert to a previous state. This irreversible progression is a key security feature of the secure key management system 102 shown in **FIG. 1****,** ensuring that once a write-once register has been used and invalidated, it cannot be recovered to access previously encrypted data.

The counter values (4i+0, 4i+1, 4i+2, 4i+3) shown in the state details boxes may correspond to the values maintained by the counter 104 in **FIG. 1****.** These values can allow the secure key management system 102 to track the state of each write-once register, even across power cycles or system resets, enabling the system to maintain security properties despite potential interruptions.

This state transition mechanism for individual write-once registers can form the foundation of the system state machine shown in **FIG. 2****.** As each write-once register transitions through these three states in sequence, the system can progress through its lifecycle from initial deployment through multiple cryptographic erasures and eventually to the end-of-lifetime state.

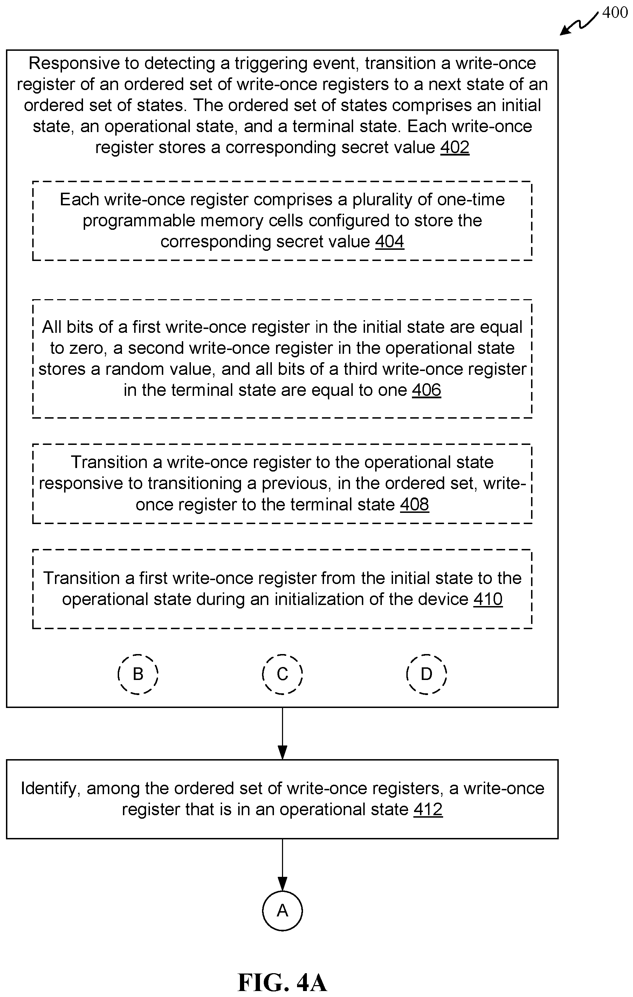

**FIGS. 4A-4E** is a flowchart illustrating an example method 400 for implementing cryptographic key management in a self-encrypting storage device, in accordance with some implementations of the present disclosure. A processing device, having one or more central processing units (CPU(s)), one or more graphics processing units (GPU(s)), and/or memory devices communicatively coupled to the one or more CPU(s) and/or GPU(s) can perform the method 400 and/or one or more of the method's 400 individual functions, routines, subroutines, or operations. In certain implementations, a single processing thread can perform the method 400. Alternatively, two or more processing threads can perform the method 400, each thread executing one or more individual functions, routines, subroutines, or operations of the method. In an illustrative example, the processing threads implementing the method 400 can be synchronized (e.g., using semaphores, critical sections, and/or other thread synchronization mechanisms). Alternatively, the processing threads implementing the method 400 can be executed asynchronously with respect to each other. Various operations of the method 400 can be performed in a different (e.g., reversed) order compared with the order shown in **FIGS. 4A-4E****.** Some operations of the method 400 can be performed concurrently with other operations. Some operations can be optional. In some implementations, the processing logic in the SED controller 114 and/or the secure key management system 102 shown in **FIG. 1** perform the operations.

Referring to **FIG. 4A****,** at block 402, the method can include, responsive to detecting a triggering event, transitioning a write-once register of an ordered set of write-once registers to a next state of an ordered set of states. The ordered set of states can include an initial state, an operational state, and a terminal state. Each write-once register can store a corresponding secret value. The triggering event may include a secure erase command from a host system, a device initialization operation, or a security policy enforcement event.

At block 404, each write-once register may include a plurality of one-time programmable memory cells configured to store the corresponding secret value. These memory cells correspond to the write-once registers described in relation to **FIG. 1****,** such as the write-once registers (R₀ 106-0 through Rₙ 106-N).

At block 406, all bits of a first write-once register in the initial state may be equal to zero, a second write-once register in the operational state may store a random value, and all bits of a third write-once register in the terminal state may be equal to one. This block describes the three distinct states shown in **FIG. 3****,** including the initial state 302, operational state 304, and terminal state 306.

At block 408, the method may include transitioning a write-once register to the operational state responsive to transitioning a previous, in the ordered set, write-once register to the terminal state. This operation corresponds to the sequential nature of the state transitions depicted in **FIG. 2****,** where each active state (204, 208, 212) is reached only after the previous write-once register has been invalidated.

At block 410, the method may include transitioning a first write-once register from the initial state to the operational state during the initialization of the device. This initialization process corresponds to the transition from the initial state 202 to the first active state 204 in **FIG. 2****.**

At block 412, the method includes identifying, among the ordered set of write-once registers, a write-once register that is in an operational state. This step may identify the write-once register used to derive the SRK.

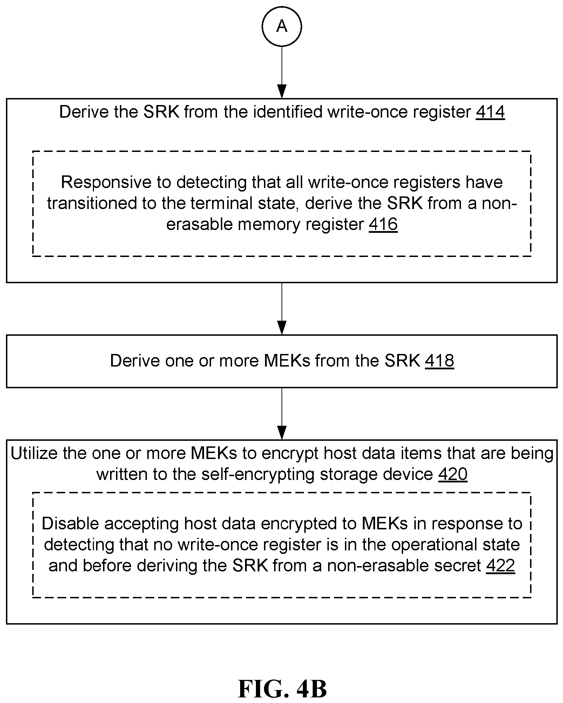

Referring to **FIG. 4B****,** at block 414, the method can also include deriving the SRK from the identified write-once register. This derivation process corresponds to the key derivation shown in **FIG. 1** that produces the SRK 108 from the active write-once register.

At block 416, responsive to detecting that all write-once registers have transitioned to the terminal state, the method can include deriving the SRK from a non-volatile memory register. This operation enables the device to continue functioning in the end-of-lifetime state 222 shown in **FIG. 2****,** when all write-once registers have been used.

At block 418, the method can include deriving a MEK from the SRK. This corresponds to the generation of MEKs 110 from the SRK 108 as shown in **FIG. 1****.**

At block 420, the method can include utilizing the MEK to encrypt a host data item that is being written to the self-encrypting storage device. This operation represents the core functionality of the storage encryption engine 112 shown in **FIG. 1****,** which uses the MEKs to encrypt host data 122 stored on the storage media 120.

At block 422, the method can include disabling accepting host data encrypted to MEKs in response to detecting that no write-once register is in the operational state and before deriving the SRK from a non-volatile secret. This security measure ensures that during transition states 206, 210, 214, 218 shown in **FIG. 2****,** no data encryption operations can occur.

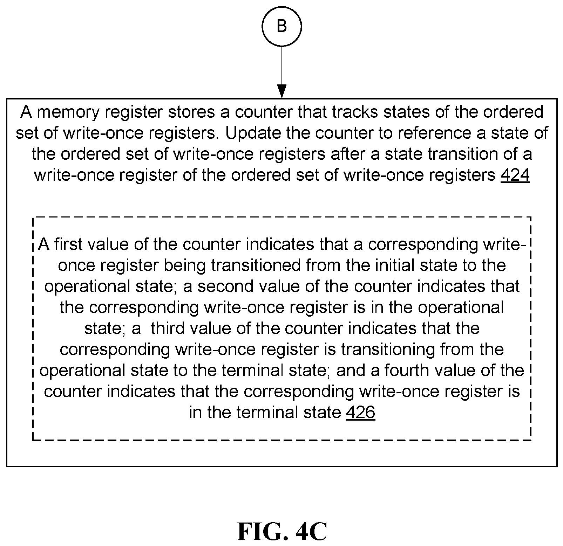

Referring to **FIG. 4C****,** at block 424, a memory register may store a counter that tracks states of the ordered set of write-once registers. The method can include updating the counter to reference the state of the ordered set of write-once registers after a state transition of a write-once register of the ordered set of write-once registers. This counter may correspond to the counter 104 shown in **FIG. 1****.**

At block 426, a first value of the counter may indicate that a corresponding write-once register is being transitioned from the initial state to the operational state, a second value of the counter may indicate that the corresponding write-once register is in the operational state, a third value of the counter may indicate that the corresponding write-once register is transitioning from the operational state to the terminal state, and a fourth value of the counter may indicate that the corresponding write-once register is in the terminal state. These counter values correspond to the 4i+0, 4i+1, 4i+2, and 4i+3 values described in relation to FIG. 3, which enable the system to track the state of each write-once register.

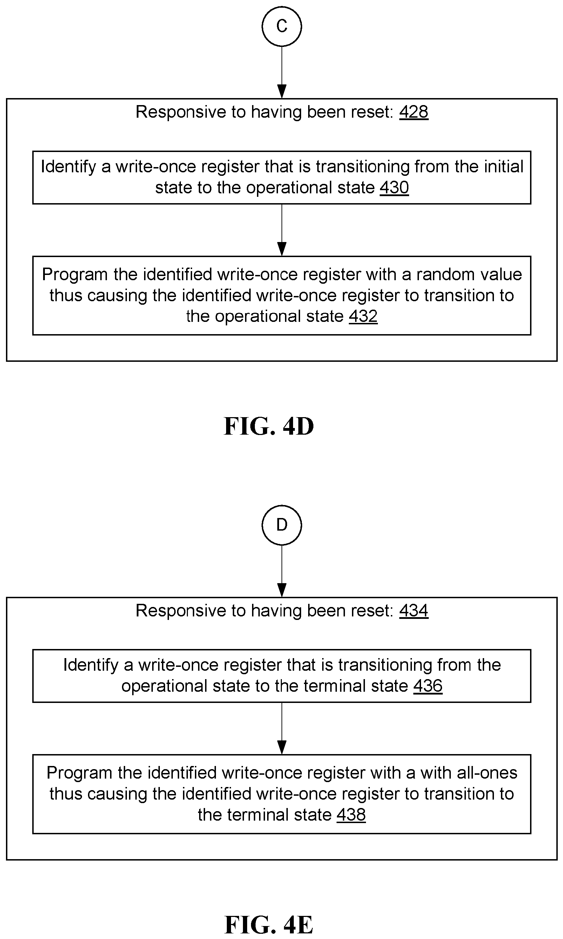

Referring to **FIG. 4D****,** at block 428, responsive to having been reset, the method can proceed to subsequent operations to recover from power interruptions or system resets.

At block 430, the method can include identifying a write-once register that is transitioning from the initial state to the operational state. This identification is made possible by the counter values described in block 426.

At block 432, the method can include programming the identified write-once register with a random value thus causing the identified write-once register to transition to the operational state. This operation can complete any interrupted transition to the operational state, ensuring the system can continue normal operation after a reset.

Referring to **FIG. 4E****,** at block 434, responsive to having been reset, the method can proceed to operations for handling interruptions during transitions to the terminal state.

At block 436, the method can include identifying a write-once register that is transitioning from the operational state to the terminal state. This identification is again enabled by the counter values described in block 426.

At block 438, the method can include programming the identified write-once register with all ones thus causing the identified write-once register to transition to the terminal state. This operation completes any interrupted transition to the terminal state, ensuring that cryptographic erasure operations are not left partially complete after a reset.

The method 400 may be performed by processing logic that comprises hardware (e.g., circuitry, dedicated logic, programmable logic, microcode, etc.), software (e.g., instructions executed by a processing device), firmware, or a combination thereof. In some implementations, the method 400 is performed by the secure key management system 102 of the self-encrypting drive 100 depicted in **FIG. 1****.**

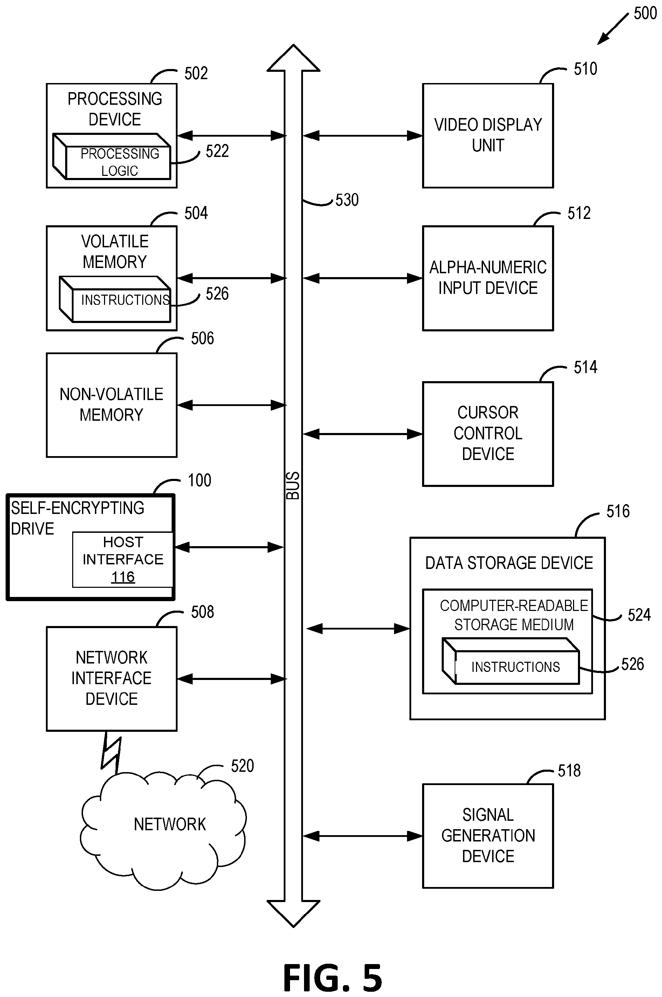

**FIG. 5** is a block diagram illustrating an exemplary computer system 500, in accordance with implementations of the present disclosure. The computer system 500 can correspond to a host system that interfaces with the self-encrypting drive 100 described herein and with respect to **FIGS. 1-4E****.** Computer system 500 can operate in the capacity of a server or an endpoint machine in endpoint-server network environment, or as a peer machine in a peer-to-peer (or distributed) network environment. The machine can be a television, a personal computer (PC), a tablet PC, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system 500 includes a processing device 502, a volatile memory 504 (e.g., read-only memory (ROM), flash memory, dynamic random access memory (DRAM) such as synchronous DRAM (SDRAM), double data rate (DDR SDRAM), or DRAM (RDRAM), etc.), a non-volatile memory 506 (e.g., flash memory, static random access memory (SRAM), etc.), and a self-encrypting drive 100, which communicate with each other via a bus 530.

Processor (processing device) 502 represents one or more general-purpose processing devices such as a microprocessor, central processing unit, or the like. More particularly, the processor 502 can be a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor 502 can also be one or more special-purpose processing devices such as an application specific integrated circuit (ASIC), a field programmable gate array (FPGA), a digital signal processor (DSP), network processor, or the like. The processor 502 may be configured to execute instructions 526 for performing the operations discussed herein.

The computer system 500 can further include a network interface device 508. The computer system 500 also can include a video display unit 510 (e.g., a liquid crystal display (LCD) or a cathode ray tube (CRT)), an input device 512 (e.g., a keyboard, and alphanumeric keyboard, a motion sensing input device, touch screen), a cursor control device 514 (e.g., a mouse), and a signal generation device 518 (e.g., a speaker).

The data storage device 516 can include a non-transitory machine-readable storage medium 524 (also computer-readable storage medium) on which are stored one or more sets of instructions 526 embodying any one or more of the methodologies or functions described herein. The instructions can also reside, completely or at least partially, within the volatile memory 504 and/or within the processor 502 during execution thereof by the computer system 500, the volatile memory 504 and the processor 502 also constituting machine-readable storage media. The instructions can further be transmitted or received over a network 520 via the network interface device 508.

The self-encrypting drive 100 can either be a part of system 500 (e.g., local drive connected to the main bus via its host interface 116) or an external drive connected to the bus of system 500 via its the host interface 116, which may allow the processing device 502 to communicate with the drive for data storage and retrieval operations. The self-encrypting drive 100 can implement the cryptographic erasure mechanism using write-once registers as described in relation to **FIGS. 1-4E****.** When the computer system 500 issues commands to store or retrieve data, these commands may be processed by the host interface 116 and passed to the SED controller 114 within the self-encrypting drive 100, which can coordinate with the secure key management system 102 and storage encryption engine 112 to securely encrypt and decrypt the data as it is written to or read from the storage media.

In one implementation, the instructions 526 include instructions for managing cryptographic erasure operations for the self-encrypting drive 100, including sending triggering events to initiate state transitions in the write-once registers as described in relation to **FIG. 2** and **FIGS. 4A****-4E.** While the computer-readable storage medium 524 (machine-readable storage medium) is shown in an exemplary implementation to be a single medium, the terms "computer-readable storage medium" and "machine-readable storage medium" should be taken to include a single medium or multiple media (e.g., a centralized or distributed database, and/or associated caches and servers) that store the one or more sets of instructions. The terms "computer-readable storage medium" and "machine-readable storage medium" shall also be taken to include any medium that is capable of storing, encoding or carrying a set of instructions for execution by the machine and that cause the machine to perform any one or more of the methodologies of the present disclosure. The terms "computer-readable storage medium" and "machine-readable storage medium" shall accordingly be taken to include, but not be limited to, solid-state memories, optical media, and magnetic media.

Reference throughout this specification to "one implementation," or "an implementation," means that a particular feature, structure, or characteristic described in connection with the implementation is included in at least one implementation. Thus, the appearances of the phrase "in one implementation," or "in an implementation," in various places throughout this specification can, but are not necessarily, referring to the same implementation, depending on the circumstances. Furthermore, the features, structures, or characteristics can be combined in any suitable manner in one or more implementations.

To the extent that the terms "includes," "including," "has," "contains," variants thereof, and other similar words are used in either the detailed description or the claims, these terms are intended to be inclusive in a manner similar to the term "comprising" as an open transition word without precluding any additional or other elements.

As used in this application, the terms "component," "module," "system," or the like are generally intended to refer to a computer-related entity, either hardware (e.g., a circuit), software, a combination of hardware and software, or an entity related to an operational machine with one or more specific functionalities. For example, a component can be, but is not limited to being, a process running on a processor (e.g., digital signal processor), a processor, an object, an executable, a thread of execution, a program, and/or a computer. By way of illustration, both an application running on a controller and the controller can be a component. One or more components can reside within a process and/or thread of execution and a component can be localized on one computer and/or distributed between two or more computers. Further, a "device" can come in the form of specially designed hardware; generalized hardware made specialized by the execution of software thereon that enables hardware to perform specific functions (e.g., generating interest points and/or descriptors); software on a computer readable medium; or a combination thereof.

The aforementioned systems, circuits, modules, and so on have been described with respect to interaction between several components and/or blocks. It can be appreciated that such systems, circuits, components, blocks, and so forth can include those components or specified sub-components, some of the specified components or sub-components, and/or additional components, and according to various permutations and combinations of the foregoing. Sub-components can also be implemented as components communicatively coupled to other components rather than included within parent components (hierarchical). Additionally, it should be noted that one or more components can be combined into a single component providing aggregate functionality or divided into several separate sub-components, and any one or more middle layers, such as a management layer, can be provided to communicatively couple to such sub-components in order to provide integrated functionality. Any components described herein can also interact with one or more other components not specifically described herein but known by those of skill in the art.

Moreover, the words "example" or "exemplary" are used herein to mean serving as an example, instance, or illustration. Any aspect or design described herein as "exemplary" is not necessarily to be construed as preferred or advantageous over other aspects or designs. Rather, use of the words "example" or "exemplary" is intended to present concepts in a concrete fashion. As used in this application, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should be construed to mean "one or more" unless specified otherwise or clear from context to be directed to a singular form.

## Claims

1. A self-encrypting storage device comprising:
an ordered set of write-once registers, each write-once register configured to store a corresponding secret value;
a key derivation circuit configured to derive a Storage Root Key (SRK) from a secret value; and
a processing logic configured to:
responsive to detecting a triggering event, transition a write-once register of the ordered set of write-once registers to a next state of an ordered set of states, wherein the ordered set of states comprises an initial state, an operational state, and a terminal state;
identify, among the ordered set of write-once registers, a write-once register that is in an operational state; and
derive the SRK from the identified write-once register.

2. The self-encrypting storage device of claim 1, wherein the processing logic is further configured to:
derive one or more MEKs from the SRK; and
utilize the one or more MEKs to encrypt host data items that are being written to the self-encrypting storage device.

3. The self-encrypting storage device of claim 1, further comprising:
a memory register storing a counter configured to track states of the ordered set of write-once registers,
wherein the processing logic is further configured to:
update the counter to reference a state of the ordered set of write-once registers after a state transition of a write-once register of the ordered set of write-once registers, and optionally wherein:
a first value of the counter indicates that a corresponding write-once register being transitioned from the initial state to the operational state;
a second value of the counter indicates that the corresponding write-once register is in the operational state;
a third value of the counter indicates that the corresponding write-once register is transitioning from the operational state to the terminal state; and
a fourth value of the counter indicates that the corresponding write-once register is in the terminal state.

4. The self-encrypting storage device of any preceding claim, wherein the processing logic is further configured to:
responsive to having been reset:
identify a write-once register that is transitioning from the initial state to the operational state; and program the identified write-once register with a random value thus causing the identified write-once register to transition to the operational state, and/or
identify a write-once register that is transitioning from the operational state to the terminal state; and program the identified write-once register with all-ones thus causing the identified write-once register to transition to the terminal state.

5. The self-encrypting storage device of any preceding claim, wherein:
all bits of a first write-once register in the initial state are equal to zero,
a second write-once register in the operational state stores a random value, and
all bits of a third write-once register in the terminal state are equal to one.

6. The self-encrypting storage device of any preceding claim , wherein the processing logic is configured to:
transition a write-once register to the operational state responsive to transitioning a previous, in the ordered set, write-once register to the terminal state, and/or
transition a first write-once register from the initial state to the operational state during an initialization of the device.

7. The self-encrypting storage device of any preceding claim, wherein the processing logic is further configured to:
responsive to detecting that all write-once registers have transitioned to the terminal state, derive the SRK from a non-volatile memory register, and/or
disable accepting host data encrypted to MEKs in response to detecting that no write-once register is in the operational state and before deriving the SRK from a non-volatile secret.

8. The self-encrypting storage device of any preceding claim, wherein each write-once register comprises a plurality of one-time programmable memory cells configured to store the corresponding secret value.

9. A method for cryptographic key management in a self-encrypting storage device, the method comprising:
storing secret values in an ordered set of write-once registers;
responsive to detecting a triggering event, transitioning a write-once register of the ordered set of write-once registers to a next state of an ordered set of states, wherein the ordered set of states comprises an initial state, an operational state, and a terminal state;
identifying, among the ordered set of write-once registers, a write-once register that is in an operational state; and
deriving a Storage Root Key (SRK) from the identified write-once register in the operational state.

10. The method of claim 9, further comprising:
deriving a Media Encryption Key (MEK) from the SRK; and
utilizing the MEK to encrypt a host data item that is being written to the self-encrypting storage device.

11. The method of claim 9 or claim 10, further comprising:
tracking states of the ordered set of write-once registers using a counter; and
updating the counter to reference a state of the ordered set of write-once registers after a state transition of a write-once register of the ordered set of write-once registers.

12. The method of any of claims 9 to 11, wherein transitioning the write-once register to the next state comprises:
transitioning a write-once register to the operational state only after transitioning a previous write-once register in the ordered set to the terminal state.

13. The method of any of claims 9 to 12, further comprising:
upon device reset, identifying a write-once register that is in the process of transitioning from the initial state to the operational state; and completing the transition by programming the identified write-once register with a random value to place it fully in the operational state, and/or
upon device reset, identifying a write-once register that is in the process of transitioning from the operational state to the terminal state; and completing the transition by programming the identified write-once register with all-ones to place it fully in the terminal state.

14. The method of any of claims 9 to 13, further comprising:
responsive to detecting that all write-once registers have transitioned to the terminal state, deriving the SRK from a non-volatile memory register; and
indicating that the self-encrypting storage device is operating in an end-of-lifetime state.

15. Computer instructions, optionally stored on a non-transitory computer-readable medium, that, when executed by a processing device, cause the processing device to perform the method of any of claims 9 to 14.
